# EUROPÄISCHE PATENTSCHRIFT

(11) **EP 0 838 145 B1**
(45) Veröffentlichungstag und Bekanntmachung des Hinweises auf die Patenterteilung: **09.05.2001**
(21) Anmeldenummer: 97115448.9
(22) Anmeldetag: 06.09.1997
(51) Int. Cl.: A01D 69/06, F16H 1/14

(54) **Winkelgetriebe**
Angular gear
Engrenage angulaire

(30) Priorität: 24.10.1996 DE 19643559
(43) Veröffentlichungstag der Anmeldung: 29.04.1998
(73) Patentinhaber: GKN Walterscheid GmbH, 53797 Lohmar (DE); GKN Walterscheid Getriebe GmbH, 02681 Kirschau (DE)
(72) Erfinder: Roth, Andreas, Dipl.-Ing., 02681 Kirschau (DE); Jacob, Johannes, 02692 Obergurig (DE); Coenen, Karl, Dipl.-Ing., 53721 Siegburg (DE)
(74) Vertreter: Harwardt, Günther, Dipl.-Ing.

(56) Entgegenhaltungen:
- DE-A- 1 550 838
- US-A- 4 463 823
- PATENT ABSTRACTS OF JAPAN vol. 006, no. 187 (M-158), 25.September 1982 & JP 57 093813 A (MITSUBISHI AGRICULT MACH CO LTD), 11.Juni 1982,

## Beschreibung

Die Erfindung betrifft ein Winkelgetriebe, insbesondere für den Antrieb von oder für Antriebe in landwirtschaftlichen Geräten mit einem Gehäuse und zwei von dem Gehäuse umschlossenen und miteinander kämmenden Kegelrädern sowie mit Dichtungen.

Ein solches Winkelgetriebe wird beispielsweise zum Antrieb eines die Zinkenarme tragenden Kreiseltellers eines Heuwenders (Kreiselheuers) eingesetzt. Dabei wird das Gehäuse des Winkelgetriebes durch einen Abschnitt des Tragrahmens des Gerätes gebildet.
Die im Abstand nebeneinander angeordneten Abschnitte sind durch Tragrohre verbunden, durch die eine mehrere Winkelgetriebe treibende Welle hindurchgeführt ist.

Ferner sind Kegelradwinkelgetriebe bekannt, bei denen die Gehäuse, die die Kegelräder lagern, im wesentlichen als quaderförmiger Kasten gestaltet sind.

Von Nachteil bei diesen Ausführungen ist, daß die Gehäuse ein relativ großes Volumen aufweisen, das eine Ölfüllung zum Schmieren besitzt. Ist eine Teilfüllung mit Schmieröl vorgesehen, so können Situationen eintreten, bei denen die Kegelräder nicht ausreichend geschmiert werden, da solche Geräte auch in Hanglagen eingesetzt werden. Ferner ist von Nachteil, daß bei Undichtigkeiten eine verhältnismäßig große Ölmenge austreten kann.

Der Erfindung liegt daher die Aufgabe zugrunde, ein Winkelgetriebe zu schaffen, das eine kompakte und abgeschlossene Baueinheit darstellt.

Diese Aufgabe wird erfindungsgemäß dadurch gelöst, daß das Gehäuse einen ersten Gehäuseabschnitt, der bezogen auf die erste Drehachse des ersten Kegelrades an eine radial innere ringförmige Wand (innere Ringwand) und eine radial dazu beabstandete erste ringförmige äußere Wand (äußere Ringwand) sowie eine die beiden miteinander verbindende erste Stirnwand aufweist, so daß zwischen diesen ein Ringraum gebildet ist, und einen zweiten Gehäuseabschnitt umfaßt, der winklig zum ersten Gehäuseabschnitt verläuft und der eine ringförmig um eine winklig zur ersten Drehachse angeordnete zweite Drehachse verlaufende Außenwand aufweist, die einstückig mit der ringförmigen äußeren Wand des ersten Gehäuseabschnittes verbunden ist und zum Ringraum desselben einen Durchbruch aufweist und der ferner eine zweite Stirnwand besitzt, die einstückig mit der ersten Stirnwand des ersten Gehäuseabschnittes ausgebildet ist, wobei im Ringraum des ersten Gehäuseabschnittes das erste Kegelrad aufgenommen ist und dessen Verzahnung zur ersten Stirnwand hinweist, sowie das zweite Kegelrad im zweiten Gehäuseabschnitt mit seiner Verzahnung zur zweiten Stirnwand hinweisend angeordnet ist, und die Verzahnungen des ersten und zweiten Kegelrades im Bereich des Durchbruches zwischen den beiden Gehäuseabschnitten kämmen.

Durch die Ineinanderschachtelung wird eine Baueinheit geschaffen, die nur einen geringen Bauraum einnimmt. Entsprechend ist auch der Totraum in dem Gehäuse klein ausgebildet, so daß der für die Schmierung des Getriebes erforderliche Ölbedarf äußerst gering ist. Entsprechend ist auch bei Leckagen der mögliche Verlust an Öl mengenmäßig gering, so daß keine nennenswerte Umweltschädigung eintreten kann. Es läßt sich darüber hinaus eine Baueinheit erzielen, die zuläßt, eine Welle durch das Gehäuse hindurchzuführen, so daß beispielsweise eine zentrale Welle zum Antrieb mehrerer nebeneinander angeordneter Winkelgetriebe genutzt werden kann. Hierbei braucht kein Eingriff in das Getriebegehäuse selbst zu erfolgen. Beispielsweise sind keinerlei Dichtungen erforderlich, um gegenüber der hindurchgeführten Welle eine Abdichtung vorzunehmen. Somit sind vormontierte Baueinheiten geschaffen. Vorzugsweise sind die beiden Gehäuseabschnitte und die beiden Drehachsen rechtwinklig zueinander verlaufend angeordnet. Auch andere Winkel sind möglich.

Eine günstige Ausbildung wird dadurch erreicht, daß das erste Kegelrad einen auf der ersten Drehachse zentrierten Lagerabschnitt besitzt, der eine Lagerbohrung aufweist und das mittels mindestens eines Wälzlagers, das zusammen mit einer der ersten Stirnwand entfernt angeordneten Dichtung im Ringspalt zwischen einer Lagersitzfläche der inneren Wand und der Lagerbohrung angebracht ist, gelagert ist und daß der Lagerabschnitt eine äußere Dichtfläche aufweist, zwischen der und einer Bohrung der äußeren Wand des ersten Gehäuseabschnittes eine Dichtung angeordnet ist. Die Dichtungen sind bei dieser Anordnung jeweils geschützt untergebracht.

Ferner ist in Ausgestaltung der Erfindung vorgesehen, daß die ringförmige Außenwand des zweiten Gehäuseabschnittes eine Aufnahmebohrung für ein Wälzlager aufweist, das eine Sitzfläche eines dem zweiten Kegelrad angeformten Sitzabschnittes aufnimmt, und daß die Ringöffnung zwischen dem Sitzabschnitt und der Lagerbohrung von der zweiten Stirnwand des zweiten Gehäuseabschnittes weg durch eine Dichtung nach außen abgeschlossen ist.

Für den Anschluß des zweiten Kegelrades an eine Welle ist vorgesehen, daß dieses zusammen mit dem angeformten Sitzabschnitt eine durchgehende Anschlußbohrung aufweist, in welche die Welle einsteckbar ist. Darüber hinaus ist eine zweite Stirnwand mit einer Bohrung versehen, in welcher ein Fortsatz des zweiten Kegelrades hineinragt. Zwischen beiden ist eine Dichtung und gegebenenfalls ein weiteres Lager angeordnet. Hierdurch ist es möglich, die Welle insgesamt durch den zweiten Gehäuseabschnitt hindurchzuführen. Dabei kann die Welle beispielsweise ein Keiloder Mehrkantprofil aufweisen. Ein entsprechendes Profil ist in die Bohrung des zweiten Kegelrades geräumt.

Vorzugsweise dienen zur Lagerung des ersten Kegelrades zwei beabstandete Wälzlager. Zur Verbindung des ersten Kegelrades mit einem Antrieb bzw. mit einem anzutreibenden Bauteil sind Anschlußmittel vorgesehen. Diese umfassen beispielsweise Anschlußbohrungen an der Stirnfläche des Lagerabschnittes, welche von den Zähnen wegweist. Darüber hinaus kann auch eine Sitzfläche vorgesehen sein, um die anzuschließenden Bauteile zu zentrieren. Es kann beispielsweise ein Teller, der die Zinkenarme eines Heuwenders trägt, mit dem Lagerabschnitt verschraubt werden.

Zur Festlegung des Gehäuses können beispielsweise an der äußeren Ringwand des ersten Gehäuseabschnittes Augen oder dergleichen Mittel angeformt sein, die Befestigungsbohrungen zur Durchführung von Schrauben aufweisen. Alternativ ist es möglich, die Bohrung in der inneren Ringwand des ersten Gehäuseabschnittes zur Festlegung des Getriebes an einen Zapfen zu nutzen. Ferner kann diese Bohrung auch zur Lagerung oder Befestigung eines Bauteiles einer Maschine dienen, so daß das Getriebe beispielsweise ein Maschinenteil hält.

Ein bevorzugtes Ausführungsbeispiel des erfindungsgemäßen Getriebes ist in der Zeichnung schematisch dargestellt.

Es zeigt
- Figur 1: einen Schnitt durch das Gehäuse mit den beiden Gehäuseabschnitten in einer Ebene, die die Drehachsen beider Kegelräder enthält,
- Figur 2: eine Ansicht des Getriebes in Pfeilrichtung X und
- Figur 3: eine Ansicht des Getriebes in Pfeilrichtung Y.

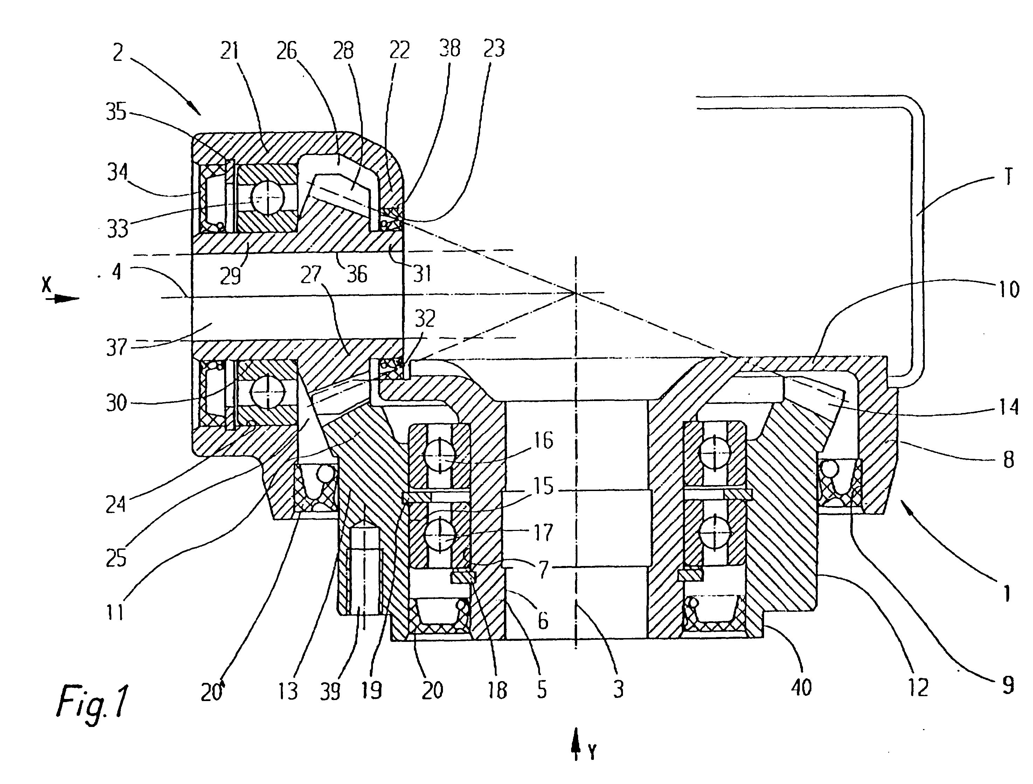

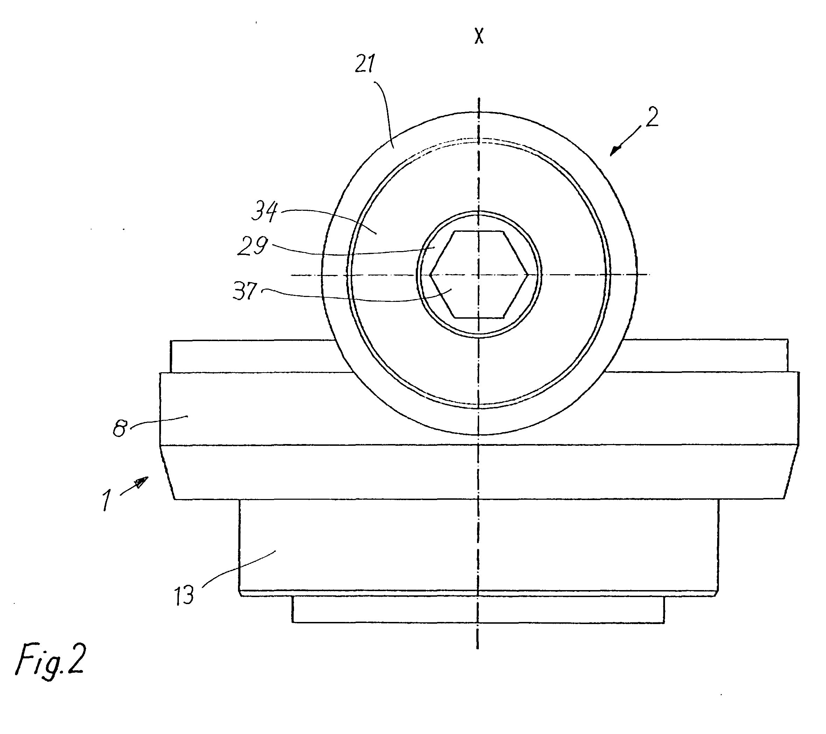

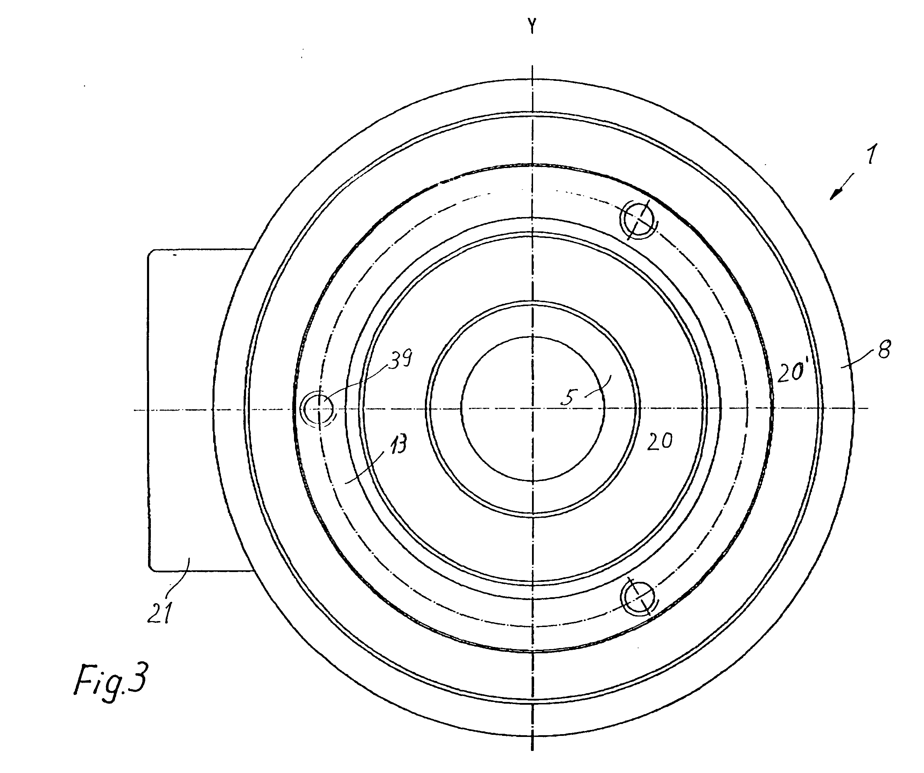

Das erfindungsgemäße Getriebe gemäß Figuren 1 bis 3 ist in Figur 1 einem Tragrahmen T, der als Kastenrahmen gestaltet ist, zugeordnet dargestellt. Das Getriebe umfaßt ein Gehäuse, das aus einem ersten Gehäuseabschnitt 1 und einem zweiten Gehäuseabschnitt 2 aufgebaut ist. Der erste Gehäuseabschnitt 1 dient zur Aufnahme eines ersten Kegelrades, das drehbar in diesem um die erste Drehachse 3 angeordnet ist. Dem zweiten Gehäuseabschnitt 2 ist ein zweites Kegelrad zugeordnet, das um die zweite Drehachse 4 drehbar angeordnet ist.

Die beiden Gehäuseabschnitte verlaufen im wesentlichen rechtwinklig zueinander, d.h. ihre beiden Drehachsen 3, 4 sind in einer Ebene angeordnet und stehen senkrecht aufeinander.

Der erste Gehäuseabschnitt 1 weist eine erste innere Ringwand 5 auf, die eine auf der ersten Drehachse 3 zentrierte Bohrung 6 besitzt. Auf der dazu abgewandten Fläche ist eine zylindrische Lagersitzfläche 7 angeordnet. Im radialen Abstand zur inneren Ringwand 5 befindet sich eine äußere Ringwand 8, die in Richtung der Drehachse 3 kürzer ausgebildet ist. Beide sind durch eine erste Stirnwand 10 miteinander verbunden, so daß sich zwischen den beiden Ringwänden 5, 8 ein einseitig geschlossener Ringraum ergibt, der zur Aufnahme des ersten Kegelrades 11 dient. Das erste Kegelrad 11 besitzt von seinen Zähnen 14 weg einen als Ring gestalteten Lagerabschnitt 13, der eine Lagerbohrung 15 und auf seiner Außenfläche eine Dichtfläche 12 aufweist. Das erste Kegelrad 11 ist mittels zweier Wälzlager 16, 17 auf der Lagersitzfläche 7 der inneren Ringwand 5 des ersten Gehäuseabschnittes 1 gelagert. Hierzu sind die äußeren Lagerringe der beiden Wälzlager 16, 17 in der Lagerbohrung 15 aufgenommen, während deren beiden Innenringe auf der Lagersitzfläche 7 aufgenommen sind. Zur Festlegung des Wälzlagers 17 in Richtung der Drehachse 3 dienen zwei Sicherungsringe 18, 19, von denen der Sicherungsring 18 in einer Nut des in der Lagersitzfläche 7 der inneren Ringwand 5 einsitzt und den Lagerinnenring sichert, und der zweite Sicherungsring 19 auf der davon abgewandten Seite sich gegen den äußeren Lagerring abstützt und in einer Nut in der Lagerbohrung 15 des Lagerabschnittes 13 des ersten Kegelrades 11 einsitzt. Die Verzahnung 14 weist zur ersten Stirnwand 10 des ersten Gehäuseabschnittes 1 hin. Der Spalt zwischen der Bohrung 9 in der äußeren Ringwand 8 und der zylindrischen Dichtfläche 12 des ersten Kegelrades 11 ist durch eine Dichtung 20' abgedichtet, während der Ringspalt zwischen der Lagerbohrung 15 und der Lagersitzfläche 7 durch eine Dichtung 20 abgedichtet ist. Hierdurch ist der Gehäuseabschnitt 1 nach außen vollständig abgedichtet. Das erste Kegelrad 11 weist darüber hinaus in seiner dem Lagerabschnitt 13 zugehörigen und der Verzahnung 14 abgewandten Stirnfläche umfangsverteilt Gewindebohrungen 39 und einen Zentriersitz 40 auf, welche zum Anschluß beispielsweise an ein anzutreibendes Bauteil dienen.

Der zweite Gehäuseabschnitt 2 umfaßt eine ringförmige Außenwand 21, die in die äußere Ringwand 8 übergeht und welche in einer Stirnwand 22 endet, die in die erste Stirnwand 10 des ersten Gehäuseabschnittes 1 übergeht. Die ringförmige Außenwand 21 besitzt eine Aufnahmebohrung 24, die auf der Drehachse 4 zentriert ist und eine ebenfalls auf der Drehachse 4 zentrierte Bohrung 23 in der Stirnwand 22. Das zweite Kegelrad 27 weist zur zweiten Stirnwand 22 hin die Verzahnung 28 auf. Es weist ferner einen Fortsatz 33, der sich bis in die Bohrung 23 der Stirnwand 22 erstreckt, und einen zur entgegengesetzten Seite abstehenden Sitzabschnitt 29 auf, der außen eine zylindrische Sitzfläche 30 besitzt. Die Verzahnung 14, 28 der beiden Kegelräder 11, 27 ragt in den Durchbruch 25 hinein, welcher im Stoßbereich der beiden Gehäuseabschnitte 1, 2 angeordnet ist. Die beiden Verzahnungen 14, 28 kämmen in diesem Bereich. Das zweite Kegelrad 27 ist mittels eines auf der Sitzfläche 30 des Sitzabschnittes 29 mit seinem Lagerinnenring aufsitzenden Wälzlager 33 im Innenraum 26 des zweiten Gehäuseabschnittes 2 gelagert, wobei der äußere Lagerring in der Aufnahmebohrung 24 durch einen Sicherungsring 35 gegen axiale Verlagerung aus dem zweiten Gehäuseabschnitt 2 heraus gesichert ist. Zwischen der Außenfläche 32 des Fortsatzes 31 und der Wandung der Bohrung 23 ist ein Dichtring 38 eingesetzt. Ferner ist in dem ringförmigen Spalt zwischen der Aufnahmebohrung 24 und der Sitzfläche 30 des zweiten Kegelrades 27 ein weiterer Dichtring 34 zur Abdichtung eingesetzt. Das zweite Kegelrad 27 besitzt eine Anschlußbohrung 36, die einen vom Kreisquerschnitt abweichenden Querschnitt oder ein Keilprofil aufweist, und sie dient zur Aufnahme einer entsprechend im Querschnitt geformten Welle 37, die beispielsweise zum Antrieb dient.

### Bezugszeichenliste

- 1: erster Gehäuseabschnitt
- 2: zweiter Gehäuseabschnitt
- 3: erste Drehachse
- 4: zweite Drehachse
- 5: innere Ringwand
- 6: Bohrung
- 7: Lagersitzfläche
- 8: äußere Ringwand
- 9: Bohrung
- 10: erste Stirnwand
- 11: erstes Kegelrad
- 12: Dichtfläche
- 13: Lagerabschnitt
- 14: Verzahnung / Zähne
- 15: Lagerbohrung
- 16, 17: Wälzlager
- 18, 19: Sicherungsring
- 20, 20': Dichtung
- 21: Außenwand
- 22: zweite Stirnwand
- 23: Bohrung
- 24: Aufnahmebohrung
- 25: Durchbruch
- 26: Innenraum
- 27: zweites Kegelrad
- 28: Verzahnung / Zähne
- 29: Sitzabschnitt
- 30: Sitzfläche
- 31: Fortsatz
- 32: Außenfläche
- 33: Wälzlager
- 34: Dichtung
- 35: Sicherungsring
- 36: Anschlußbohrung
- 37: Welle
- 38: Dichtung
- 39: Gewindebohrung
- 40: Zentriersitz

- T: Tragrahmen

## Patentansprüche

1. Winkelgetriebe, insbesondere für den Antrieb von oder für Antriebe in landwirtschaftlichen Geräten, mit einem Gehäuse (1, 2) und zwei von dem Gehäuse (1, 2) umschlossenen und miteinander kämmenden Kegelrädern (11, 27) sowie mit Dichtungen,
dadurch gekennzeichnet,
daß das Gehäuse einen ersten Gehäuseabschnitt (1), der bezogen auf die erste Drehachse (3) des ersten Kegelrades (11) eine radial innere ringförmige Wand (5) oder Zapfen und eine radial dazu beabstandete erste ringförmige äußere Wand (8) sowie eine die beiden miteinander verbindende erste Stirnwand (10) aufweist, so daß zwischen diesen ein Ringraum gebildet ist, und einen zweiten Gehäuseabschnitt (2) umfaßt, der winklig zum ersten Gehäuseabschnitt (1) verläuft und der eine ringförmig um eine winklig zur ersten Drehachse (3) angeordnete zweite Drehachse (4) verlaufende Außenwand (21) aufweist, die einstückig mit der ringförmigen äußeren Wand (8) des ersten Gehäuseabschnittes (1) verbunden ist und zum Ringraum desselben einen Durchbruch (25) aufweist und der ferner eine zweite Stirnwand (22) besitzt, die einstückig mit der ersten Stirnwand (10) des ersten Gehäuseabschnittes (1) ausgebildet ist, wobei im Ringraum des ersten Gehäuseabschnittes (1) das erste Kegelrad (11) aufgenommen ist und dessen Verzahnung (14) zur ersten Stirnwand (10) hinweist, sowie das zweite Kegelrad (27) im zweiten Gehäuseabschnitt (2) mit seiner Verzahnung (28) zur zweiten Stirnwand (22) hinweisend angeordnet ist, und die Verzahnungen (14, 28) des ersten und zweiten Kegelrades (11, 27) im Bereich des Durchbruches (25) zwischen den beiden Gehäuseabschnitten (1, 2) kämmen.

2. Winkelgetriebe nach Anspruch 1,
dadurch gekennzeichnet,
daß die beiden Gehäuseabschnitte (1, 2) und die beiden Drehachsen (3, 4) rechtwinklig zueinander verlaufend angeordnet sind.

3. Winkelgetriebe nach einem der Ansprüche 1 oder 2,
dadurch gekennzeichnet,
daß das erste Kegelrad (11) einen auf der ersten Drehachse (3) zentrierten Lagerabschnitt (13) besitzt, der eine Lagerbohrung (15) aufweist und das mittels mindestens eines Wälzlagers (16, 17), das zusammen mit einer der ersten Stirnwand (10) entfernt angeordneten Dichtung (20) im Ringspalt zwischen einer Lagersitzfläche (7) der inneren Wand (5) und der Lagerbohrung (15) angebracht ist, gelagert ist und daß der Lagerabschnitt (13) eine äußere Dichtfläche (12) aufweist, zwischen der und einer Bohrung (9) der äußeren Wand (8) des ersten Gehäuseabschnittes (1) eine Dichtung (20) angeordnet ist.

4. Winkelgetriebe nach einem der Ansprüche 1 bis 3,
dadurch gekennzeichnet,
daß die ringförmige Außenwand (21) des zweiten Gehäuseabschnittes (2) eine Aufnahmebohrung (24) für ein Wälzlager (33) aufweist, das eine Sitzfläche (30) eines dem zweiten Kegelrad (27) angeformten Sitzabschnittes (29) aufnimmt, und daß die Ringöffnung zwischen dem Sitzabschnitt (29) und der Lagerbohrung (24) von der zweiten Stirnwand (22) des zweiten Gehäuseabschnittes (2) weg durch eine Dichtung (34) nach außen abgeschlossen ist.

5. Winkelgetriebe nach einem der Ansprüche 1 bis 3,
dadurch gekennzeichnet,
daß das zweite Kegelrad (27) mit seinem Sitzabschnitt (29) eine durchgehende Anschlußbohrung (36) für den Anschluß einer Welle (37) aufweist.

6. Winkelgetriebe nach Anspruch 3,
dadurch gekennzeichnet,
daß die zweite Stirnwand (22) eine Bohrung (23) besitzt, in welche ein Fortsatz (31) des zweiten Kegelrades (27) hineinragt und zwischen beiden eine Dichtung (38) und/oder ein weiteres Lager zur Lagerung des zweiten Kegelrades (27) angeordnet ist.

7. Winkelgetriebe nach einem der Ansprüche 1 bis 3,
dadurch gekennzeichnet,
daß das erste Kegelrad (11) mittels zweier beabstandeter Wälzlager (16, 17) gelagert ist.

8. Winkelgetriebe nach einem der Ansprüche 1 bis 3,
dadurch gekennzeichnet,
daß das erste Kegelrad (11) an der Stirnfläche seines Lagerabschnittes (13), welche der Verzahnung (14) abgewandt ist, Anschlußmittel (39, 40) für die Verbindung mit einem treibenden oder anzutreibenden Bauteil aufweist.

9. Winkelgetriebe nach Anspruch 1,
dadurch gekennzeichnet,
daß die Bohrung (6) der inneren ringförmigen Wand (5) als Aufnahmebohrung für ein zu lagerndes oder festzulegendes Bauteil oder zur Befestigung des Getriebes an einem Zapfen dient.

## Claims

1. An angle drive, especially for driving, or for drives in, agricultural implements, having a housing (1, 2) and two bevel gears (11, 27) enclosed by the housing (1, 2) and engaging one another, and having seals,
characterised in
that the housing comprises a first housing portion (1) which, with reference to the first rotational axis (3) of the first bevel gear (11), comprises a radially inner annular wall (5) or journal and a first annular outer wall (8) radially spaced therefrom, as well as a first end wall (10) connecting said radially inner wall (5) and annular outer wall (8), so that an annular chamber is formed therebetween, with the housing further comprising a second housing portion (2) which extends at an angle relative to the first housing portion (1) and which comprises an outer wall (21) which extends annularly around a second rotational axis (4) arranged at an angle relative to the first rotational axis (3) and which is integrally connected to the annular outer wall (8) of the first housing portion (1) and, towards the annular chamber of same, comprises an aperture (25) and which second housing portion (2), furthermore, is provided with a second end wall (22) which is formed integrally with the first end wall (10) of the first housing portion (1), wherein, in the annular chamber of the first housing portion (1), there is received the first bevel gear (11) whose toothing (14) points to the first end wall (10) and wherein the second bevel gear (27) in the second housing portion (2) is arranged so that its toothing (28) points towards the second end wall (22) and wherein the toothings (14, 28) of the first and second bevel gears (11, 27) engage one another in the region of the aperture (25) between the two housing portions (1, 2).

2. An angle drive according to claim 1,
characterised in
that the two housing portions (1, 2) and the two rotational axes (3, 4) are arranged so as to extend at a right angle relative to one another.

3. An angle drive according to any one of claims 1 or 2,
characterised in
that the first bevel gear (11) is provided with a bearing portion (13) centred on the first rotational axis (3) and comprising a bearing bore (15), and attached by means of at least one rolling contact bearing (16, 17) which, together with a seal (20) positioned remote from the first end wall (10), is arranged in the annular gap between a bearing seat face (7) of the inner wall (5) and the bearing bore (15) and that the bearing portion (13) comprises an outer sealing face (12) between which outer sealing face and a bore (9) of the outer wall (8) of the first housing portion (1), there is arranged a seal (20).

4. An angle drive according to any one of claims 1 to 3,
characterised in
that the annular outer wall (21) of the second housing portion (2) comprises a receiving bore (24) for a rolling contact bearing (33) which receives a seat face (30) of a seat portion (29) formed on to the second bevel gear (27), and that the annular aperture between the seat portion (29) and the bearing bore (24) is outwardly sealed by a seal (34), away from the second end wall (22) of the second housing portion (2).

5. An angular drive according to any one of claims 1 to 3,
characterised in
that the second bevel gear (27) with its seat portion (29) comprises a connecting through-bore (36) for connecting a shaft (37).

6. An angle drive according to claim 3,
characterised in
that the second end wall (22) comprises a bore (23) into which there extends a projection (31) of the second bevel gear (27) and that between said bore (23) and said projection (31) there is arranged a seal (38) and/or a further bearing for supporting the second bevel gear (27).

7. An angle drive according to any one of claims 1 to 3,
characterised in
that the first bevel gear (11) is supported by two spaced rolling contact bearings (16, 17).

8. An angle drive according to any one of claims 1 to 3,
characterised in
that, at the end face of its bearing portion (13) facing away from the toothing (14), the first bevel gear (11) comprises connecting means (39, 40) for being connected to a driving or driven component.

9. An angle drive according to claim 1,
characterised in
that the bore (6) of the inner annular wall (5) serves as a receiving bore for a component to be supported or fixed, or for securing the drive to a journal.

## Revendications

1. Transmission à renvoi d'angle, en particulier pour l'entraînement d'appareils agricoles, ou bien pour des entraînements dans de tels appareils, comprenant un boîtier (1, 2), deux pignons coniques (11, 27) entourés par le boîtier (1, 2) et en engrènement l'un avec l'autre, ainsi que des joints,
caractérisée en ce que le boîtier comprend un premier tronçon de boîtier (1) qui comporte une paroi annulaire (5) ou un tenon radialement intérieur(e) par rapport au premier axe de rotation (3) du premier pignon conique (11), une première paroi extérieure annulaire (8) écartée de la première, et une première paroi frontale (10) qui relie les deux l'une à l'autre, de sorte qu'il se forme entre elles une chambre annulaire, et comprend un deuxième tronçon de boîtier (2) qui s'étend sous un angle par rapport au premier tronçon de boîtier (1) et comporte une paroi extérieure annulaire (21) qui s'étend sous forme annulaire autour d'un deuxième axe de rotation (4) agencé sous un angle par rapport au premier axe de rotation (3), ladite paroi extérieure étant reliée d'une seule pièce avec la paroi extérieure annulaire (8) du premier tronçon de boîtier (1) et présentant une traversée (25) vers la chambre annulaire de celui-ci, et comportant en outre une deuxième paroi frontale (22) qui est réalisée d'une seule pièce avec la première paroi frontale (10) du premier tronçon de boîtier (1), de sorte que le premier pignon conique (11) est reçu dans la chambre annulaire du premier tronçon de boîtier (1) et sa denture (14) est tournée vers la première paroi frontale (10), et le deuxième pignon conique (27) est agencé dans le deuxième tronçon de boîtier (2) avec sa denture (28) tournée vers la deuxième paroi frontale (22), et les dentures (14, 28) du premier et du deuxième pignon conique (11, 27) engrènent dans la région de la traversée (25) entre les deux tronçons de boîtier (1, 2).

2. Transmission à renvoi d'angle selon la revendication 1,
caractérisée en ce que les deux tronçons de boîtier (1, 2) et les deux angles de rotation (3, 4) sont agencés de manière à s'étendre perpendiculairement l'un à l'autre.

3. Transmission à renvoi d'angle, selon l'une ou l'autre des revendications 1 et 2,
caractérisée en ce que le premier pignon conique (11) comporte un premier tronçon de montage (13) centré sur le premier axe de rotation (3), qui présente un perçage de montage (15) et est monté à l'aide d'au moins un palier à roulements (16, 17), ce dernier étant monté dans la fente annulaire entre une surface d'assise de palier (7) de la paroi intérieure (5) et le perçage de montage (15) conjointement avec un joint (20) agencé à distance de la première paroi frontale (10), et en ce que le tronçon de montage (13) présente une surface d'étanchement extérieure (12), un joint (20) étant agencé entre ladite surface d'étanchement (12) et un perçage (9) de la paroi extérieure (8) du premier tronçon de boîtier (1).

4. Transmission à renvoi d'angle selon l'une des revendications 1 à 3,
caractérisée en ce que la paroi extérieure annulaire (21) du deuxième tronçon de boîtier (2) comporte un perçage de logement (24) pour un palier à roulements (33), qui reçoit une surface d'assise (30) d'un tronçon d'assise (29) formé sur le deuxième pignon conique (27), et en ce que l'ouverture annulaire entre le tronçon d'assise (29) et le perçage de montage (24) est refermée vers l'extérieur par un joint (34), en éloignement de la deuxième paroi frontale (22) du deuxième tronçon de boîtier (2).

5. Transmission à renvoi d'angle selon l'une des revendications 1 à 3,
caractérisée en ce que le deuxième pignon conique (27) comporte avec son tronçon d'assise (29) un perçage de raccordement traversant (36) pour le raccordement d'un arbre (37).

6. Transmission à renvoi d'angle selon la revendication 3,
caractérisée en ce que la deuxième paroi frontale (22) possède un perçage (23) dans lequel pénètre un prolongement (31) du deuxième pignon conique (27), et en ce qu'un joint (38) et/ou un autre palier pour le montage du deuxième pignon conique (27) est agencé entre ledit perçage et ledit prolongement.

7. Transmission à renvoi d'angle selon l'une des revendications 1 à 3,
caractérisée en ce que le premier pignon conique (11) est monté au moyen de deux paliers à roulements (16, 17) écartés l'un de l'autre.

8. Transmission à renvoi d'angle selon l'une des revendications 1 à 3,
caractérisée en ce que le premier pignon conique (11) comporte, au niveau de la surface frontale de son tronçon de montage (13) qui est détournée de la denture (14), des moyens de raccordement (39, 40) pour la liaison avec un composant menant ou mené.

9. Transmission à renvoi d'angle selon la revendication 1,
caractérisée en ce que le perçage (6) de la paroi annulaire intérieure (5) sert de perçage de réception pour un composant en monté ou à fixer, ou bien sert à la fixation de la transmission sur un tourillon.
